(19) Europäisches Patentamt / European Patent Office / Office européen des brevets

(11) **EP 4 664 063 A1**

(12) **EUROPEAN PATENT APPLICATION**
published in accordance with Art. 153(4) EPC

(43) Date of publication:
**17.12.2025 Bulletin 2025/51**

(21) Application number: **23927637.1**

(22) Date of filing: **22.12.2023**

(51) International Patent Classification (IPC):
***G01B 11/24*** *(2006.01)*

(52) Cooperative Patent Classification (CPC):
**G01B 11/24**

(86) International application number:
**PCT/JP2023/046150**

(87) International publication number:
**WO 2024/190035 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.03.2023 JP 2023037856**

(71) Applicant: **JFE Steel Corporation Tokyo 100-0011 (JP)**

(72) Inventors:
- **ONO, Hiroaki**
  **Tokyo 100-0011 (JP)**
- **AKAZAWA, Takahiro**
  **Tokyo 100-0011 (JP)**
- **GOTO, Hiroto**
  **Tokyo 100-0011 (JP)**
- **UKIDA, Takafumi**
  **Tokyo 100-0011 (JP)**
- **NISHIGAKI, Yusaku**
  **Tokyo 100-0011 (JP)**

(74) Representative: **Haseltine Lake Kempner LLP Bürkleinstrasse 10 80538 München (DE)**

(54) **METHOD FOR MEASURING SHAPE OF BELT-LIKE OBJECT, METHOD FOR CONTROLLING SHAPE OF BELT-LIKE OBJECT, METHOD FOR MANUFACTURING BELT-LIKE OBJECT, METHOD FOR CONTROLLING QUALITY OF BELT-LIKE OBJECT, DEVICE FOR MEASURING SHAPE OF BELT-LIKE OBJECT, AND EQUIPMENT FOR MANUFACTURING BELT-LIKE OBJECT**

(57) A band-like object shape measuring method for measuring a shape of a band-like object includes a capturing step of capturing an image of thermal radiation light of the band-like object such that an angle $\phi$ formed by orthographic projection of an optical axis of a camera onto a plane $\alpha$ and a conveying direction p of the band-like object does not become 90 degrees when the plane $\alpha$ is a reference plane of a surface of the band-like object, and an image processing step of calculating an index of a surface shape of the band-like object based on radiance of the band-like object in the image captured.

FIG.1

EP 4 664 063 A1

**Description**

Field

The present invention relates to a band-like object shape measuring method, a band-like object shape control method, a band-like object manufacturing method, a band-like object quality management method, a band-like object shape measuring apparatus, and band-like object manufacturing equipment.

Background

In the material industry, shape management of band-like materials is important, and quantification of product shapes has been required. For example, a shape measurement of steel materials in a steel process is highly demanded from the viewpoint of operation stability, product quality assurance, and the like. In particular, the shape measurement during rolling for producing a product with a target shape is important because it leads to improvement in product quality and operation stabilization by initial setting of rolling conditions and feedback for rolling control during rolling.

For example, in a manufacturing line of hot-rolled steel sheets, a rectangular parallelepiped semi-product called a slab in a high temperature state extracted from a heating furnace is processed into a sheet shape through the steps of sizing mill, rough rolling, and finish rolling, and coiled to be a coil as a product. At this time, depending on the rolling state, the rolling reduction may become uneven and the steel sheet may partially extend in a width direction, resulting in a shape defect.

For example, as compared with a central portion (central portion in the width direction) of the steel sheet, when only edge portions (end portions in the width direction) are extended, the edge portions will have a wavy shape. On the other hand, when only the central portion is extended, the central portion will have a wavy shape. The above shape defect not only causes a defect as a product but also deteriorates a sheet passability in next processes such as pickling and cold rolling, causing a problem. Therefore, it is highly required to avoid the shape defect.

In order to improve the shape defect, it is necessary to appropriately set a load in the width direction at the time of rolling, but there are various disturbances such as wear of a rolling roll, temperature distribution of the steel sheet, and variation in material characteristic distribution. It is extremely difficult to obtain optimum rolling conditions only by calculation. Therefore, in order to set the optimal rolling conditions, it is essential to perform preset control by matching a steel sheet shape measurement with a rolling model to derive an optimal initial setting, perform feedback control of the rolling conditions in real time, and the like. By performing the above controls, the shape defect can be finally suppressed.

However, it is difficult to measure the shape of the steel sheet after the steel sheet is formed into a roll-shaped product. In particular, it is necessary to measure the shape during rolling in the feedback control. Therefore, the shape is preferably measured immediately after an exit of finish rolling that is the final rolling process. For example, when elongation of the central portion is significant with respect to the edge portions of the steel sheet, bender control is performed to eliminate concentration of elongation to the central portion while allowing elongation at the edge portions by adjusting a load balance in the width direction of the rolling roll. The shape described herein refers to sheet elongation in a longitudinal direction that is locally generated in the width direction of the steel sheet mainly at the time of rolling the steel sheet, and specifically includes "elongation at the central portion" and "elongation at the edge portions".

As a technique for measuring the shape of the steel sheet immediately after the exit of finish rolling, various techniques such as a method using a rod-like light source or a magnetic sensor have been proposed in the past. As a particularly effective method among the above techniques, for example, Patent Literatures 1 to 3 disclose a method for measuring a shape by irradiating a target surface with a point-like or linear light beam using a laser and measuring reflected light thereof.

Further, Patent Literature 4 discloses a technique of using three line lasers whose longitudinal direction is orthogonal to the conveying direction of the steel sheet with respect to a laser irradiation system. In the technique disclosed in Patent Literature 4, a line laser is irradiated in parallel to the longitudinal direction of the steel sheet so as to form three lines at equal intervals, and reflection images thereof are acquired to compare profiles of respective lasers, thereby removing an influence of vertical vibration of the steel sheet.

In addition, Patent Literatures 5 to 7 and Non Patent Literature 1 disclose a technique of increasing the number of lines irradiated at a lower cost than a laser by irradiating a target surface with a stripe pattern including a plurality of lines using a strong LED light source, thereby stably measuring the shape regardless of a mirror surface property or inclination of the target.

A demand for the shape measurement of a steel sheet during manufacturing exists not only in a hot-rolled steel sheet but also in other band-like materials regardless of a red-heated state (e.g., 600°C or higher), a warm state (e.g., 300°C to 600°C), and a cold state (e.g., around normal temperature). The term "band-like object" as used herein refers to a long material. Examples of the band-like object include products that are formed into a rectangular sheet, plate, board, plank, and slab, such as a steel plate in addition to products finally coiled such as iron, paper, cloth, or nonferrous metal

EP 4 664 063 A1

such as aluminum.

Citation List

Patent Literature

Patent Literature 1: JP S56-124006 A
Patent Literature 2: JP S55-40924 A
Patent Literature 3: JP S58-11708 A
Patent Literature 4: JP S61-40503 A
Patent Literature 5: JP 2008-58036 A
Patent Literature 6: JP 2011-99821 A
Patent Literature 7: JP 2016-65863 A

Non Patent Literature

Non Patent Literature 1: Isei and three other persons, "Development of shape meter employing LED dot pattern projection method for hot strip finishing mill", iron and steel, The Iron and Steel Institute of Japan, 2019, Vol. 105, No. 1, p. 20- 29
Non Patent Literature 2: Kaneshige, "Thermal measurement with radiation thermometer", molding, Japan Society of Polymer Processing, 2020, Vol. 32, No. 4, p. 121 - 124
Non Patent Literature 3: Inoue, "Study on noncontact temperature measurement method of metal in cold and hot rolling", Grants-in-Aid for Scientific Research AF-1997014 report

Summary

Technical Problem

Techniques disclosed in Patent Literatures 1 to 7 are a method for measuring a shape of an object by irradiating a hot-rolled steel sheet with light using a light source and capturing reflected light with a camera. However, for example, in consideration of an influence of high temperature due to radiant heat, adhesion of steam, dust, oil, and the like to the steel sheet, an advanced technique is required for stably measuring for a long period of time in a state where the light source and the sensor are brought close to the steel sheet during conveyance. As a result, a maintenance cost will be also high.
In order to prevent this, it is conceivable to arrange the light source far from the object, but since the light is diffused and the light quantity decreases, it is difficult to design an optical system that stably condenses light in order to secure the light quantity. In addition, although there is a possibility of using a magnetic sensor or the like, it is necessary to bring the sensor itself close to a measurement target, and it is similarly difficult to install the sensor and maintain the performance.
The present invention has been made in view of the above, and an object of the present invention is to provide a band-like object shape measuring method, a band-like object shape control method, a band-like object manufacturing method, a band-like object quality management method, a band-like object shape measuring apparatus, and band-like object manufacturing equipment capable of easily and stably operating a light source or a sensor on a target that is a portion other than an edge portion of a band-like object without bringing the light source or the sensor close to the target to be measured, and also suppressing a maintenance cost.

Solution to Problem

(1) To solve the problem and achieve the object, a band-like object shape measuring method according to the present invention is the method for measuring a shape of a band-like object. The band-like object shape measuring method includes: a capturing step of capturing an image of thermal radiation light of the band-like object such that an angle $\phi$ formed by orthographic projection of an optical axis of a camera onto a plane $\alpha$ and a conveying direction p of the band-like object does not become 90 degrees, the plane $\alpha$ being a reference plane of a surface of the band-like object; and an image processing step of calculating an index of a surface shape of the band-like object based on radiance of the

3

band-like object in the image obtained.

(2) Moreover, in the band-like object shape measuring method according to above (1), the image processing step may include extracting a linear component from the radiance of the band-like object, the linear component being parallel to the conveying direction of the band-like object.

(3) Moreover, in the band-like object shape measuring method according to above (1) or (2), in the capturing step, the plane $\alpha$ and the optical axis of the camera may form an angle $\theta$ that is less than or equal to 20 degrees.

(4) Moreover, in the band-like object shape measuring method according to any one of above (1) to (3), the image processing step may include calculating, as the index, any one or more of a steepness, a wave height, a wave pitch, an elongation amount, and an elongation percentage at each position in a width direction on the surface of the band-like object from a bright-dark pattern of the band-like object obtained.

(5) Moreover, a method for controlling a shape of a band-like object according to the present invention includes: measuring the shape of the band-like object by the band-like object shape measuring method according to any one of above (1) to (4); and controlling the shape of the band-like object, based on a result of the measuring, to have a desired shape.

(6) Moreover, a method for manufacturing a band-like object according to the present invention includes: measuring a shape of the band-like object by the band-like object shape measuring method according to any one of above (1) to (4); and manufacturing the band-like object based on a result of the measuring.

(7) Moreover, a method for managing a quality of a band-like object according to the present invention includes: measuring a shape of the band-like object by the band-like object shape measuring method according to any one of above (1) to (4); and managing the quality of the band-like object based on a result of the measuring.

(8) Moreover, a band-like object shape measuring apparatus according to the present invention is the apparatus that measures a shape of a band-like object. The band-like object shape measuring apparatus includes: image capturing unit configured to capture an image of thermal radiation light of the band-like object such that an angle $\phi$ formed by orthographic projection of an optical axis of a camera onto a plane $\alpha$ and a conveying direction p of the band-like object does not become 90 degrees, the plane $\alpha$ being a reference plane of a surface of the band-like object; and image processing unit configured to calculate an index of a surface shape of the band-like object based on radiance of the band-like object in the image obtained.

(9) Moreover, band-like object manufacturing equipment according to the present invention includes the band-like object shape measuring apparatus according to above (8).

Advantageous Effects of Invention

According to a band-like object shape measuring method, a band-like object shape control method, the band-like object manufacturing method, a band-like object quality management method, a band-like object shape measuring apparatus, and band-like object manufacturing equipment according to the present invention, it is possible to easily and stably operate a light source or a sensor without bringing the light source or the sensor close to a measurement target. It is also possible to suppress a maintenance cost.

Brief Description of Drawings

FIG. 1 is a diagram illustrating a schematic configuration of a band-like object shape measuring apparatus according to an embodiment of the present invention.

FIG. 2 is a diagram illustrating an example of a state in which a change in inclination due to sheet elongation is captured as a bright-dark pattern in a steel sheet immediately after hot finish rolling.

FIG. 3 is a diagram illustrating an example of a state of an experiment for investigating angular characteristics of emissivity of a steel sheet surface.

FIG. 4 is a graph illustrating an example of a relationship between radiance and a light receiving angle on the steel sheet surface.

FIG. 5 is a diagram illustrating a generation mechanism of the bright-dark pattern in the steel sheet.

FIG. 6 is a diagram illustrating an example of arrangement of a camera for capturing sheet elongation of the steel sheet as the bright-dark pattern, in which (a) is a diagram illustrating a positional relationship viewed obliquely, (b) is a diagram illustrating the positional relationship viewed from above, and (c) is a diagram illustrating the positional relationship viewed from a direction $\delta_n$ in (b).

FIG. 7 is a diagram illustrating an example of an image of the steel sheet in a normal state and a shape defect state.

FIG. 8 is a flowchart illustrating a specific process flow of an image processing step by an image processing unit of a band-like object shape measuring apparatus according to an embodiment of the present invention.

FIG. 9 is a diagram illustrating a binarization process in the image processing step of a band-like object shape measuring method according to the embodiment of the present invention.

FIG. 10 is a diagram illustrating a rotation process in the image processing step of the band-like object shape measuring method according to the embodiment of the present invention.

FIG. 11 is a diagram illustrating a luminance profile extraction process in the image processing step of the band-like object shape measuring method according to the embodiment of the present invention.

FIG. 12 is a diagram illustrating a surface of the steel sheet cut out by a plane $\delta$ when a normal line n of a conveyance table is a Y axis and a direction orthogonal to the Y axis in the plane $\delta$ is an X axis.

FIG. 13 is a graph illustrating an example of a relationship between the radiance and the light receiving angle on the steel sheet surface.

FIG. 14 is a graph illustrating an example of a relationship between steepness and a bright-dark change rate.

FIG. 15 is a diagram illustrating an example of an image of the steel sheet captured by a camera.

FIG. 16 is a diagram illustrating an example of a case where it is difficult to distinguish a steel sheet surface from a structure.

FIG. 17 is a diagram illustrating an example of a low-pass filter process performed when it is difficult to distinguish between the steel sheet surface and the structure in the band-like object shape measuring method according to the embodiment of the present invention.

FIG. 18 is an application example when the band-like object shape measuring apparatus according to the embodiment of the present invention is applied to shape acceptance determination.

FIG. 19 illustrates an application example when the band-like object shape measuring apparatus according to the embodiment of the present invention is applied to rolling feedback control.

FIG. 20 illustrates an application example when the band-like object shape measuring apparatus according to the embodiment of the present invention is applied to rolling control using machine learning.

Description of Embodiments

A band-like object shape measuring method, a band-like object shape control method, a band-like object manufacturing method, a band-like object quality management method, a band-like object shape measuring apparatus, and band-like object manufacturing equipment according to an embodiment of the present invention will be described with reference to the drawings. Note that components in the following embodiment include those that can be easily replaced by those skilled in the art or those that are substantially the same.

(Shape measuring apparatus)

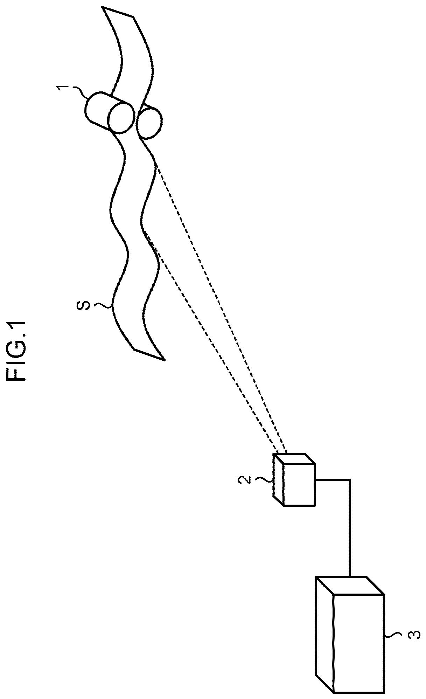

A shape measuring apparatus for band-like objects according to the embodiment will be described with reference to FIGS. 1 to 17. The shape measuring apparatus is an apparatus for measuring a shape of a band-like object. A case where the shape measuring apparatus is applied to hot finish rolling will be described below. Further, a case where the band-like object to be measured is a steel sheet will be described below. Further, a case where a shape measured by the shape measuring apparatus is elongation of a portion other than an edge portion of the steel sheet, specifically, the elongation of a central portion of the steel sheet will be described below.

As illustrated in FIG. 1, the shape measuring apparatus according to the embodiment includes a camera 2 and an image processing unit 3. First, details of the camera 2 will be described.

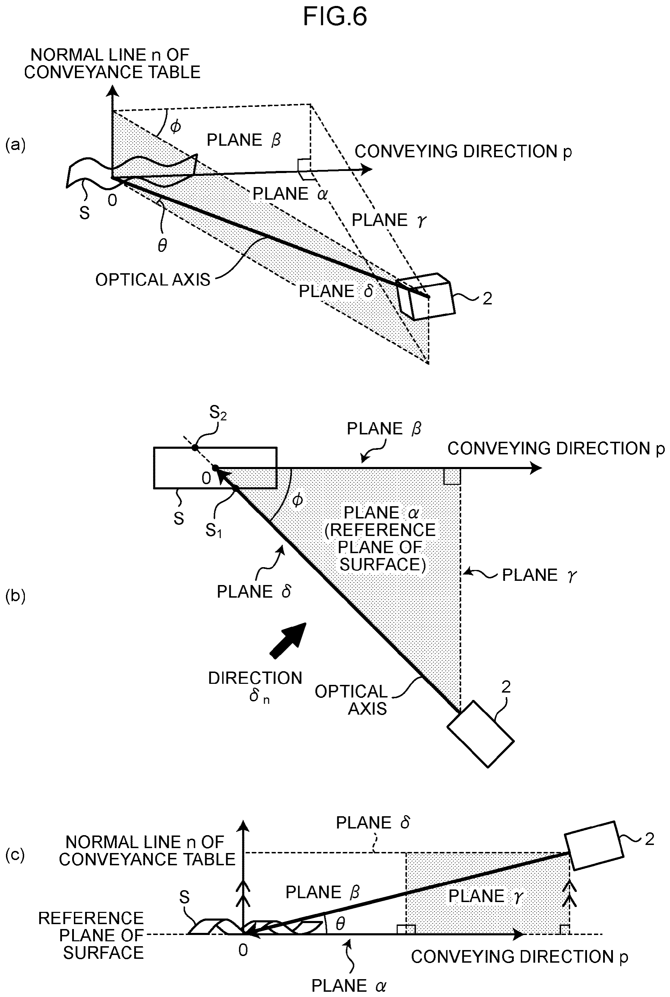

As will be described later, the camera 2 is disposed such that an angle $\phi$ formed by "orthographic projection of an optical axis of the camera onto the plane $\alpha$" and a "conveying direction p of the band-like object (steel sheet S)" does not become 90 degrees (see FIG. 6). Here, the plane $\alpha$ refers to a reference plane of a surface of the band-like object. Using the camera 2 arranged in this manner, an image of thermal radiation light of the steel sheet S on an exit side of hot finish rolling of the steel sheet S rolled by rolling roll 1 is captured.

When a digital camera or the like sold to the general public is used as the camera 2, problems such as blurring or roughness of an image occurs, and the shape of the steel sheet S cannot be clearly captured. Therefore, technical points (1) to (4) for accurately capturing the shape of the steel sheet S by the camera 2 will be described below.

(1) Securing light quantity during imaging

Firstly, a light quantity for obtaining a clear image is secured. On the exit side of hot finish rolling, the steel sheet S may pass at a speed of, for example, 20 m/s or more, and thus the speed is very high. In order to clearly capture a high-speed object without blurring, it is preferable to shorten the exposure time. For example, when imaging is performed with a resolution of about 2 mm at 20 m/s and a pixel blurring within 1 pixel, i.e., within 2 mm, an allowable exposure time is only 0.1 ms, and a received light quantity proportional to the exposure time is also very small.

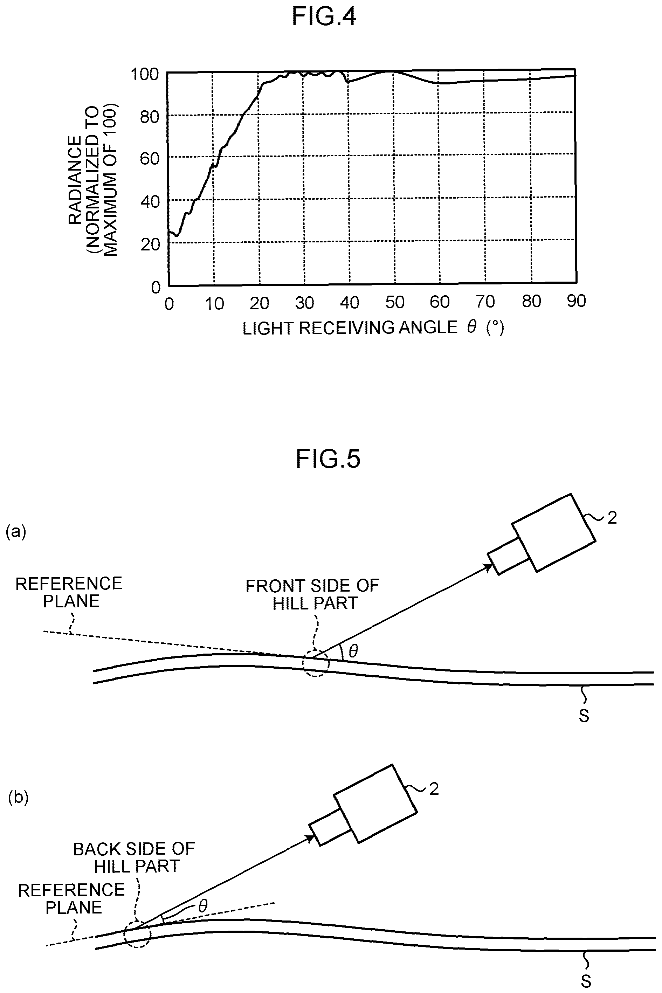

Further, a steel sheet temperature on the exit side of hot finish rolling is about 900°C. As illustrated in FIG. 5 of Non Patent Literature 2, a peak wavelength of thermal radiation light at about 900°C (1200 K) is 2.5 $\mu$m, and a sensitivity is low in a visible region (0.4 to 0.7 $\mu$m). Therefore, it is preferable to use a camera including an imaging element such as InGaAs, PbS, or PbSe as the camera 2.

On the other hand, a camera using the imaging element such as InGaAs, PbS, or PbSe is expensive. Still more, the price becomes higher according to the resolution. Thus, to capture an image with high resolution, an introduction cost increases. Therefore, as the camera 2, it is preferable to use a camera including an inexpensive Si imaging element and capable of using a near-infrared sensitivity region of 0.8 to 1.0 $\mu$m. By using such a camera 2, it is possible to obtain a sufficient thermal radiation light quantity at low cost.

Note that, when the present method is applied to an object at a lower temperature, it is preferable to use the camera 2 including an imaging element having sensitivity on the longer wavelength side. For example, when a measurement target is about 400°C, the camera 2 including an InGaAs imaging element having sensitivity to 1.2 to 1.7 $\mu$m can be used without considering the introduction cost. In addition, when the measurement target is about 200°C, the camera 2 including an imaging element such as PbS or PbSe having sensitivity to 3 to 5 $\mu$m can be used. Thus, a sufficient light quantity can be secured. In this manner, it is preferable to select the camera 2 including the imaging element having sensitivity to a suitable wavelength band according to the conveyance speed, the resolution, the temperature, a depth of field to be described later, and the like of the measurement target.

(2) Positional relationship between steel sheet and camera

Secondly, in order to clearly image the shape of the steel sheet S, a positional relationship between the steel sheet S to be measured and the camera 2 is examined. Here, it is considered to focus on a faint change in inclination in the longitudinal direction due to elongation that appears on a sheet surface when sheet elongation (specifically, elongation of a portion other than the edge portion of the band-like object, and more particularly, elongation of the central portion) occurs, and capture the change in inclination based on thermal radiation light due to heating.

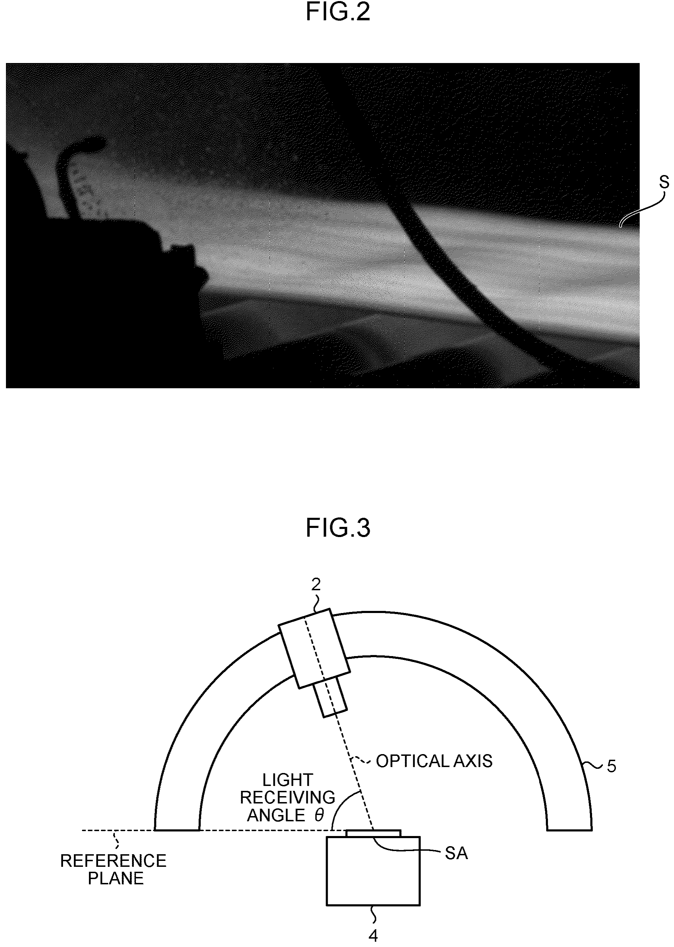

The inventors repeatedly imaged a red-heated steel sheet S under various optical conditions to obtain knowledge and study through heated imaging testing in a laboratory. As a result, the inventors have found that a faint inclination on the surface of the steel sheet S can be captured as a change in luminance in an image by imaging the steel sheet S at a low angle (light receiving angle) formed between the reference plane of the surface of the steel sheet S and the optical axis of the camera 2. For example, FIG. 2 illustrates a state in which a change in inclination due to sheet elongation is captured as a bright-dark pattern in the red-heated steel sheet S immediately after hot finish rolling.

FIG. 3 illustrates an experiment in which an angular characteristic of the emissivity of the surface of the steel sheet S is investigated. In the shape measuring apparatus according to the embodiment, it was attempted to simulate a process of heating by an apparatus in FIG. 3 in order to capture an image of thermal radiation light due to heating of the steel sheet S to be measured. Therefore, as illustrated in FIG. 3, a steel sheet sample SA cut into small pieces was placed on a heater 4, and an image was captured by the camera 2. In addition, a tilt mechanism 5 used is capable of reducing an angle (light receiving angle) formed between the reference plane of the surface of the steel sheet sample SA and the optical axis of the camera 2 while keeping the surface of the steel sheet sample SA that is the measurement target as a visual field. As a result, while the steel sheet sample SA was heated by the heater 4, the thermal radiation light due to heating of the steel sheet sample SA was stably imaged at an arbitrary light receiving angle $\theta$ (vertical is defined as 90 degrees).

Using the apparatus illustrated in FIG. 3, thermal radiation light due to heating of the steel sheet sample SA was repeatedly imaged at each light receiving angle $\theta$, so as to investigate the relationship between radiance and the light receiving angle $\theta$. FIG. 4 illustrates the relationship between the radiance and the light receiving angle $\theta$ obtained. In FIG. 4, a vertical axis represents the radiance, and a horizontal axis represents the light receiving angle $\theta$. The radiance is normalized so that 100 is the maximum. In addition, since the radiance and the emissivity are in a proportional relationship, the radiance may be hereinafter referred to as emissivity.

As illustrated in FIG. 4, it can be seen that the emissivity is constant from immediately above the steel sheet sample SA (light receiving angle $\theta$ = 90 degrees) to around 60 degrees, but thereafter, as the light receiving angle $\theta$ decreases, the emissivity decreases rapidly. A generation mechanism of the bright-dark pattern studied based on the data in FIG. 4 will be described with reference to FIG. 5.

When imaging is performed at a low light receiving angle $\theta$, a faint change in inclination occurs on the surface according to an elongation shape by occurrence of elongation in the longitudinal direction of the steel sheet S. As illustrated in (a) of FIG. 5, the optical axis of the camera 2 rises on the front side of a hill part, and thus the light receiving angle $\theta$ increases. On the other hand, as illustrated in (b) of FIG. 5, the optical axis of the camera 2 lies on the back side of the hill part, and thus the light receiving angle $\theta$ decreases.

According to the data of the emissivity angle dependence of the thermal radiation light due to heating illustrated in FIG. 4, the radiance increases as the light receiving angle $\theta$ increases, and the radiance decreases as the light receiving angle $\theta$ decreases at low angles (e.g., 0 degrees to less than 60 degrees). Therefore, when the steel sheet S is imaged by the camera 2, the bright-dark pattern is formed on the image.

As described in Non Patent Literature 3, the emissivity angle dependence of thermal radiation light due to heating can be theoretically described by a complex refractive index of the target. However, a model described in Non Patent Literature 3 has a problem in that a surface roughness, a coating film, and the like are not considered. Note that this phenomenon similarly occurs not only in the steel sheet S but also in band-like objects made of various materials of metal and non-metal, and thus, it is possible to accurately capture faint inclination variation also in band-like objects other than the steel sheet S.

Further, the emissivity angle dependence of the thermal radiation light due to heating does not depend much on a light receiving wavelength. Therefore, it is preferable to select the camera 2 in accordance with the temperature of the steel sheet S to be measured. When selecting the camera 2, it is preferable to consider whether or not the imaging element included in the camera 2 selected can image, with respect to the temperature, a wavelength that can secure a light quantity or a wavelength with less disturbance. Further, there is a correlation between an intensity of the bright-dark pattern and an amount of change in inclination, and as will be described later, a degree of occurrence of sheet elongation (specifically, elongation of the portion other than the edge portion of the band-like object, and more particularly, elongation of the central portion) can also be used as an index.

Subsequently, based on the above mechanism, optical conditions under which the bright-dark pattern can be accurately observed will be examined. FIG. 6 illustrates an example of arrangement of the camera 2 for capturing the sheet elongation as the bright-dark pattern. In FIG. 6, (a) is a diagram of the positional relationship viewed obliquely, (b) is a diagram of the positional relationship viewed from above, and (c) is a diagram of the positional relationship viewed from a direction $\delta_n$ in (b). Here, the direction $\delta_n$ is a direction in which the optical axis of the camera 2 can be viewed from right beside. By defining the direction $\delta_n$ in this way, a magnitude of the light receiving angle $\theta$ to be described later can be accurately viewed.

In (a), (b), and (c) of FIG. 6, the plane $\alpha$ is parallel to a conveyance table of the steel sheet S, and a plane $\beta$ includes the conveying direction p of the steel sheet S and a normal line n of the conveyance table. Furthermore, an angle $\theta$ (light receiving angle $\theta$) is formed by the optical axis of the camera 2 and the plane $\alpha$, and an angle $\phi$ is formed by orthographic projection of the optical axis of the camera 2 onto the plane $\alpha$ and the conveying direction p. The plane $\alpha$ includes a surface of the band-like object (steel sheet S) in a state where the band-like object (steel sheet S) is stably conveyed in a substantially flat shape. Therefore, the plane $\alpha$ is the same plane as the reference plane in FIG. 3 and is the reference plane of the surface of the band-like object (steel sheet S).

Still more, a direction of the normal line n of the conveyance table is the same as the normal direction of the surface of the steel sheet S in a state where the steel sheet S conveyed is stably conveyed in a substantially flat shape. Therefore, the plane $\alpha$ includes the conveying direction p of the band-like object (steel sheet S) and is perpendicular to the normal direction of the surface of the band-like object (steel sheet S). Still more, the plane $\beta$ is also a plane including the conveying direction p of the band-like object (steel sheet S) and the normal direction of the surface of the band-like object (steel sheet S). Still more, in FIG. 6, a point 0 is an intersection of the plane $\alpha$ and the optical axis. Still more, a plane $\gamma$ is a plane perpendicular to the conveying direction of the steel sheet. In other words, as the above-described angle $\phi$ approaches 90 degrees, the plane $\gamma$ and the optical axis approach parallel.

First, the light receiving angle $\theta$ is set, which is an angle formed between the plane $\alpha$ of the reference plane of the surface of the steel sheet S and the optical axis of the camera 2. The light receiving angle $\theta$ may be appropriately set according to a purpose or a place where the shape measurement is performed. For example, as described above, the light receiving angle $\theta$ may be set from the relationship between the thermal radiation light due to heating and the light receiving angle $\theta$ obtained by the experiment. When an experiment result in FIG. 4 is used, it is desirable that the light receiving angle $\theta$, which is an angle formed by the plane $\alpha$ of the reference plane of the surface of the steel sheet S and the optical axis of the camera 2, is 20 degrees or less.

The inclination of the surface of the steel sheet S due to sheet elongation occurs in the longitudinal direction of the steel sheet S, i.e., a direction parallel to the conveying direction p. Therefore, when imaging is performed such that the optical axis of the camera 2 is in a direction perpendicular to the conveying direction of the steel sheet S, i.e., direction that the angle $\phi$ is 90 degrees, it is very difficult to capture an image of inclination variation as the bright-dark pattern. Therefore, the optical axis of the camera 2 is arranged such that the angle $\phi$ does not become 90 degrees.

Still more, the angle $\phi$ is desirably 45 degrees or less. Furthermore, the angle $\phi$ is most preferably 0 degrees. On the other hand, when the angle $\phi$ approaches 0 degrees, the camera installation position approaches a conveyance line. Therefore, the installation environment deteriorates due to high temperature or the like caused by radiant heat. Since it is necessary to perform engineering that enables stable operation even in a poor environment, the angle $\phi$ may be made as small as possible upon taking a distance from the conveyance line to an extent that the camera is not affected by thermal radiation or the like.

A condition that the bright-dark pattern with respect to the sheet elongation (specifically, elongation of a portion other than the edge portion of the band-like object, and more particularly, elongation of the central portion) is most prominent is imaging from the same direction or the opposite direction as the conveying direction of the steel sheet S.

However, in this case, it is necessary to install the camera 2 immediately above the line or in the vicinity of the line. As a result, the camera 2 is installed in a poor environment exposed to mist, dust, high temperature, and the like which is not preferable.

Still more, as illustrated in FIG. 6, by imaging the steel sheet S while looking into the steel sheet S at a low angle with respect to the light receiving angle θ, a distance between both ends of the steel sheet S in the image is reduced, and an image of both edge portions can be acquired in a smaller visual field. Further, the smaller the target visual field is, the smaller the image size is, and thus it is advantageous when high conveyance speed of the steel sheet S to be measured requires high-speed imaging or image processing.

(3) Distance between steel sheet and camera

Thirdly, a distance between the steel sheet S to be measured and the camera 2 is increased. This is because, by separating the camera 2 from the manufacturing line as much as possible, the camera 2 can be installed in a favorable environment, and a difference in optical conditions such as the light receiving angle θ and the angle ϕ in the sheet width direction, i.e., at both edge portions, of the steel sheet S can be reduced. When there is a difference in the optical conditions in the sheet width direction of the steel sheet S, this difference appears as a difference in appearance. As a result, a level of shape defect may be misjudged when the determination is made visually. A larger correction is required when the level of shape defect is quantified by image processing. In order to increase the distance, it is preferable to use a telephoto lens for imaging. By using the telephoto lens, a difference in optical conditions can be reduced.

(4) Setting appropriate diaphragm value

Fourthly, in order to secure the depth of field, a diaphragm value of the camera 2 is appropriately determined. For example, it is assumed that the entire surface of the steel sheet S is imaged across both edge portions on the front side (lower side) and the back side (upper side) of the steel sheet S. In this case, when a sheet width of the steel sheet S is d (mm), a difference $\Delta L$ (mm) between a distance from the camera 2 to the edge portion on the front side and a distance from the camera 2 to the edge portion on the back side can be expressed by Formula (1) below.

$$\Delta L = d\cos\theta/\sin\phi \qquad\qquad \cdots (1)$$

In order to acquire an image in which both edge portions of the steel sheet S are in focus, at least the depth of field (range in focus) needs to be $\Delta Ld$ (mm) or more. Since the depth of field increases as the diaphragm value increases, it is preferable to set the diaphragm to $\Delta Ld$ (mm) or more. However, when the diaphragm value increases, a light quantity becomes insufficient, and there is a concern that blurring may occur. Therefore, it is preferable to determine the diaphragm value and a focal length that can balance blurring and the depth of field according to the conveyance speed of the steel sheet S to be measured and the required resolution. Next, the image processing unit 3 will be described.

The image processing unit 3 is realized by, for example, a general-purpose computer such as a workstation or a personal computer. The image processing unit 3 may be installed near the camera 2, or may be installed on a cloud if high speed is unnecessary.

As described later, the image processing unit 3 calculates an index of the surface shape of the steel sheet S based on the radiance of the steel sheet S in an image captured and obtained by the camera 2. As described later, the image processing unit 3 appropriately selects, from the bright-dark pattern of the steel sheet S, any one or more of a steepness, a wave height, a wave pitch, an elongation amount, and an elongation percentage at each position in the width direction on the surface of the steel sheet S, and calculates the index thereof. Hereinafter, a process of calculating the index of the shape of the steel sheet S from the image obtained by the camera 2 using the image processing unit 3 will be described.

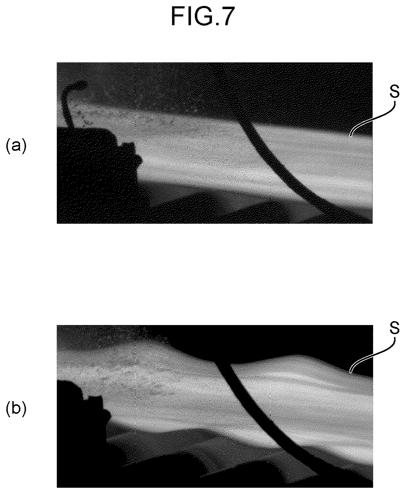

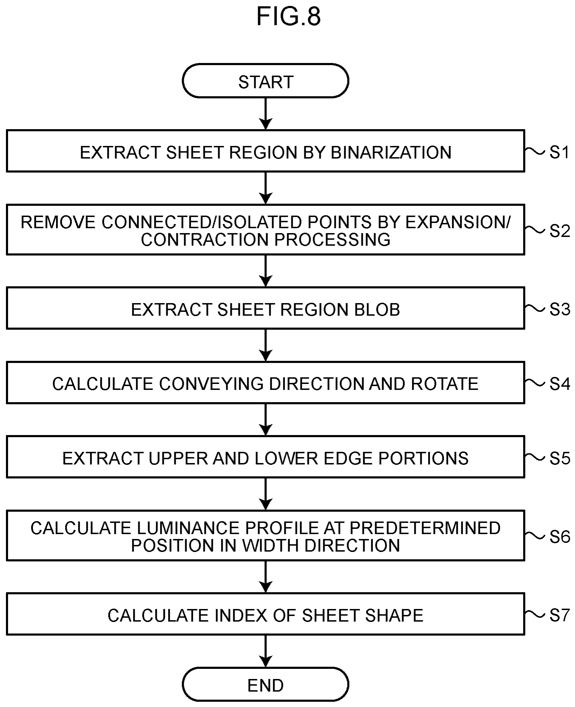

An image of the steel sheet S in a normal state is illustrated in (a) of FIG. 7, and an image of the steel sheet S when a shape defect occurs is illustrated in (b) of FIG. 7. As illustrated in FIG. 7, a state of sheet elongation can be visually determined. The image processing unit 3 calculates the index of the shape of the steel sheet S from the image of the steel sheet S acquired according to, for example, a procedure illustrated in FIG. 8. In the following description, with respect to a vertical axis and a horizontal axis of the image, an axis closer to parallel with the conveying direction of the steel sheet S is defined as the horizontal axis for convenience of explanation.

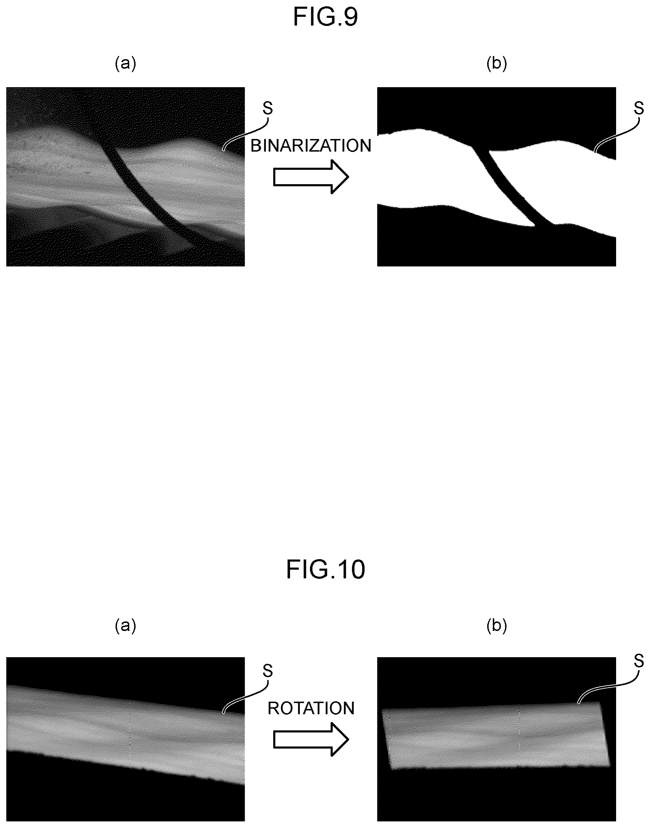

First, as illustrated in FIG. 9, only a sheet region of the steel sheet S is extracted by binarization (Step S1 in FIG. 8). An image before binarization is illustrated in (a) of FIG. 9, and an image after binarization is illustrated in (b) of FIG. 9.

At this time, there may be a case where a disturbance occurs, such as a local decrease in luminance on the sheet surface due to water on the sheet surface, droplets of cooling water, or the like, or shining due to thermal radiation light scattered from the steel sheet S caused by droplets splashed into a space above the sheet. Since these disturbances are often in a high frequency band and faint with respect to a pitch of the shape to be calculated, it is desirable to remove connected/isolated points by expansion/contraction processing, a median filter or the like (Step S2 in FIG. 8) on the sheet region extracted in a binarization step.

In addition, there is a case where a plurality of blobs (lumps recognized by connecting surrounding pixels when binarized) that will be candidates of the sheet region is generated after removing connection/isolated point. In this case, the sheet region may be determined by extracting a blob (Step S3 in FIG. 8) or determining the sheet region based on a size, a direction, and the like of the steel sheet S.

Subsequently, for the sheet region of the steel sheet S obtained as described above, the bright-dark pattern generated perpendicularly to the conveying direction of the steel sheet S is extracted. Note that extraction of the bright-dark pattern specifically refers to calculation of a luminance profile. At that time, in order to easily extract the bright-dark pattern, for example, the image is rotated so that the conveying direction of the steel sheet S coincides with the vertical axis or the horizontal axis of the image (Step S4 in FIG. 8), as illustrated in FIG. 10. An image before rotation is illustrated in (a) of FIG. 10, and an image after rotation is illustrated in (b) of FIG. 10.

At this time, it is necessary to determine the conveying direction of the steel sheet S. However, as long as the visual field of the camera 2 does not change, the conveying direction may be a direction fixed in advance or may be automatically calculated from the image. For example, a direction obtained by linearly fitting upper and lower contours of the sheet region and calculating an average tilt may be set as the conveying direction of the steel sheet S. When the sheet region is considerably long in the longitudinal direction, elliptical approximation may be performed on the blob of the sheet region, and a direction of a major axis obtained may be set as the conveying direction. A similar result can also be obtained by calculating a direction in which the Feret's diameter is maximized with respect to the above-described blob.

Subsequently, a vertical direction of the image obtained is set as a sheet width direction, and positions of upper and lower edge portions are extracted (Step S5 in FIG. 8).

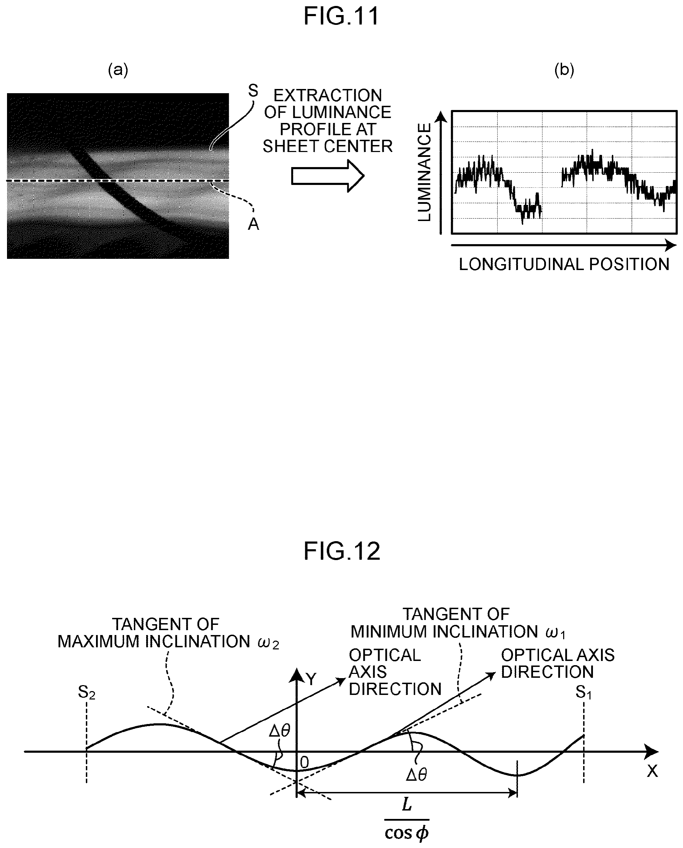

Subsequently, a luminance profile at a predetermined position in the width direction of the steel sheet S is calculated (Step S6 in FIG. 8). In this step, for example, the luminance profile is calculated by extracting linear components parallel to the conveying direction of the steel sheet S in the radiance of the steel sheet S, as illustrated in FIG. 11. An image before the luminance profile is calculated is illustrated in (a) of FIG. 11, and the luminance profile calculated is illustrated in (b) of FIG. 11. In the case of the present embodiment, the conveying direction p of the steel sheet S coincides with a rolling direction of the steel sheet S.

In this step, coordinates of the upper and lower edge portions of the steel sheet S are first calculated, and then coordinates in the width direction for calculating the luminance profile are calculated from relative positions of both coordinates. For example, when $y1$ is the coordinate of the upper edge portion of the steel sheet S and $y2$ is the coordinate of the lower edge portion of the steel sheet S, a coordinate at the center in the width direction (sheet center) can be calculated by "$(y1 + y2)/2$". As a result, the linear components parallel to the conveying direction of the steel sheet S at the center in the width direction of the steel sheet S can be extracted from the radiance of the steel sheet S.

Still more, when it is desired to calculate the luminance profile at a position of $\alpha$% from the upper edge portion of the steel sheet S, a coordinate at this position can be calculated by "$(1 - \alpha)y1 + \alpha y2$". As a result, it is possible to extract the linear components parallel to the conveying direction of the steel sheet S at a predetermined position in the width direction of the steel sheet S from the radiance of the steel sheet S.

When the luminance profile at the predetermined position in the width direction of the steel sheet S is calculated, a local noise such as droplet may be added. Therefore, not only the luminance profile of one line at the predetermined position in the width direction of the steel sheet S but also luminance profiles of several upper and lower lines may be extracted and averaged in the longitudinal direction of the image, so as to reduce an influence of noise.

Subsequently, an index of the shape of the steel sheet S is calculated from the luminance profile obtained (Step S7 in FIG. 8). As illustrated in FIG. 6 described above, when the surface of the steel sheet S is imaged from a direction at a low angle with respect to the steel sheet S and in a direction inclined with respect to the conveying direction of the steel sheet S, the bright-dark pattern is generated according to a change of inclination caused by the shape. An intensity of the bright-dark pattern increases as the inclination largely changes. Therefore, by indexing the intensity of the bright-dark pattern caused by the shape, it is possible to index a degree of sheet elongation at the predetermined position in the width direction of the steel sheet S.

In addition, since a wave pitch of a wave generated in the shape of the steel sheet S depends on a diameter of the rolling roll 1, the wave pitch is within a certain range. Therefore, by performing frequency analysis and extracting only frequency components caused by sheet elongation, it is possible to reduce a high frequency or periodic noise. For the frequency analysis, a low-pass filter such as a moving average filter may be used, or Fourier transform, inverse Fourier transform, or the like may be used. Still more, as a high-pass filter, a frequency filter similar to the low-pass filter may be used, or a difference of zero-order and first-order components may be taken after polynomial approximation, such as by taking a difference after linear approximation. In this way, an index of the shape of the steel sheet S is calculated from the luminance profile obtained by extracting only a sheet elongation component.

A method for calculating the index of the shape of the steel sheet S may be any method as long as the intensity of the bright-dark pattern can be quantified, and thus various methods are applicable. For example, methods (i) to (iii) described below can be used.

(i) A difference or a ratio between the maximum luminance and the minimum luminance is extracted and used as an index. A method for calculating the maximum luminance and the minimum luminance is not necessarily the maximum value and the minimum value, and may be a percentile or the like in which values are sorted in descending order in an applicable range to extract the top 10%.

(ii) An average value of the luminance profile is corrected to 0, and its variance or standard deviation is used as an index.

(iii) A table or a conversion formula is created by experimentally or theoretically associating a relationship between the intensity (maximum value, minimum value, or standard deviation) of the bright-dark pattern and the index of the shape (steepness or elongation amount), and applying the table or the conversion formula to actual measurement to calculate the index of the shape of the steel sheet S.

Furthermore, by studying a relationship between an angular characteristic of the emissivity and a change in inclination on the surface of the steel sheet S (hereinafter referred to as "steel sheet surface") caused by sheet elongation (specifically, elongation of a portion other than the edge portion of the band-like object, and more particularly, elongation of the central portion) in the index of the shape obtained by (i) above, it is also possible to calculate a steepness from the bright-dark pattern based on a physical theory.

First, the relationship between the steepness and the change of inclination in the optical axis direction of the camera 2 (hereinafter referred to as "camera optical axis direction") on the surface of the steel sheet is formulated. As a premise, the sheet elongation is a sin wave, its amplitude is h/2, and a period is L. In addition, a steepness $\lambda$ at this time is h/L.

Here, in order to consider inclination variation of the sheet surface in the camera optical axis direction, a plane $\delta$ formed by the normal line n of the conveyance table and the optical axis is assumed. Then, when the normal line n of the conveyance table is the Y axis and the direction orthogonal to the Y axis in the plane $\delta$ (direction parallel to the plane $\delta$) is the X axis, the surface of the steel sheet is cut out as illustrated in FIG. 12 by the plane $\delta$ and expressed by Formula (2) below. Note that an origin in FIG. 12 is a midpoint in the width direction of the steel sheet.

At this time, when $S_1$ is a near side edge on the steel sheet S with respect to the camera 2, and $S_2$ is a far side edge, the surface of the steel sheet S cut out by the plane $\delta$ is a line segment $S_1S_2$ as illustrated in (b) of FIG. 6. The line segment $S_1S_2$ is a sin wave having a period of L/cos$\phi$, and its phase is set to $\Psi$. More specifically, the near side edge $S_1$ is a point representing an edge on the camera 2 side of a line segment formed by the plane $\delta$ and the surface of the steel sheet. Further, the back side edge $S_2$ is a point representing an edge on the side opposite to the camera 2 of the line segment formed by the plane $\delta$ and the surface of the steel sheet.

$$Y(X) = \frac{h}{2}\sin\left(2\pi\frac{\cos\phi}{L}X + \psi\right) \quad \cdots (2)$$

In the above Formula (2), Y is the normal line n of the conveyance table, X is the direction orthogonal to the Y axis in the plane $\delta$, h/2 is the amplitude, L is the period, and $\Psi$ is an arbitrary phase.

Next, a relationship between the inclination in the camera optical axis direction and brightness will be studied. As illustrated in FIG. 4, in low-angle imaging, the radiance increases as the light receiving angle increases. In the line segment $S_1S_2$, when the light receiving angle $\theta$ is the largest with respect to the camera optical axis direction, i.e., when the inclination in the above Formula (2) is the largest, the image becomes brightest. The inclination at this time is defined as $\omega_2$. The maximum inclination of the line segment $S_1S_2$ is $\omega_2$. Similarly, in the line segment $S_1S_2$, when the light receiving angle $\theta$ is the smallest with respect to the camera optical axis direction, i.e., when the inclination in the above Formula (2) is the smallest, the image becomes the darkest. The inclination at this time is defined as $\omega_1$. The minimum inclination of the line segment $S_1S_2$ is $\omega_1$.

In order to obtain the maximum inclination $\omega_2$ and the minimum inclination $\omega_1$, Formula (3) below can be obtained by differentiating above Formula (2) with X.

$$Y'(X) = \frac{\pi h\cos\phi}{L}\left(\cos 2\pi\frac{\cos\phi}{L}X + \psi\right) \quad \cdots (3)$$

From above Formula (3) obtained, the maximum inclination $\omega_2$ can be calculated by Formula (4) below, and the minimum inclination $\omega_1$ can be calculated by Formula (5) below. In addition, as indicated in Formulas (4) and (5) below, absolute values of the maximum inclination $\omega_2$ and the minimum inclination $\omega_1$ are the same.

$$\omega_2 = Y'(-\psi) = \frac{\pi h \cos\phi}{L} \qquad \cdots (4)$$

$$\omega_1 = Y'\left(-\psi + \frac{L}{2\cos\phi}\right) = -\frac{\pi h \cos\phi}{L} \qquad \cdots (5)$$

At this time, an angle between a tangent of the maximum inclination $\omega_2$ and the X axis and an angle between a tangent of the minimum inclination $\omega_1$ and the X axis are defined as $\Delta\theta$ (degrees), respectively (see FIG. 12). Then, when h/L is replaced with the steepness $\lambda$ and approximation is used as h<<L, a relationship between $\Delta\theta$ and the steepness $\lambda$ can be expressed by Formula (6) below. As illustrated in FIG. 12, $\Delta\theta$ in Formula (6) below is an angle formed by the reference plane (plane $\alpha$) and the tangent of the maximum inclination $\omega_2$, and is an angle formed by the reference plane (plane $\alpha$) and the tangent of the minimum inclination $\omega_1$.

$$\Delta\theta \approx \frac{180}{\pi}\tan(\Delta\theta) = \frac{180}{\pi}\omega_2 = \frac{180}{\pi}\frac{\pi h \cos\phi}{L} = 180\lambda\cos\phi \qquad \cdots (6)$$

Next, from the angular characteristic of the emissivity illustrated in FIG. 4, brightness variations at the maximum light receiving angle $\theta + \Delta\theta$ and at the minimum light receiving angle $\theta - \Delta\theta$ are calculated. At that time, when a luminance ratio of a bright portion and a dark portion is calculated in order to cancel the influence of background brightness variation caused by a temperature change of the target, and the relationship between a bright-dark change rate **r** and the steepness $\lambda$ can be organized as the bright-dark change rate r, the steepness $\lambda$ can be calculated from the image. Note that the bright-dark change rate r may be obtained by automatically calculating the luminance of the bright portion and the dark portion of the image using image processing.

First, in the graph in FIG. 4, a mathematical formula is fitted and modeled in a range that the light receiving angle $\theta$ is 20 degrees or less. In this range, the radiance I ($\theta$) also increases by an increase in the light receiving angle $\theta$. The mathematical formula to be fitted may be any formula, but here, linear approximation is performed as in Formula (7) below. In Formula (7) below, I ($\theta$) is obtained by linearly approximating a region of $0 < \theta < 20$ in the angular characteristic of the emissivity.

$$I(\theta) = a\theta + b \qquad \cdots (7)$$

Next, the bright-dark change rate r is defined. A ratio between the radiance at the maximum light receiving angle $\theta + \Delta\theta$ at which the radiance is maximized on the surface of the steel sheet and the radiance at the minimum light receiving angle $\theta - \Delta\theta$ at which the radiance is minimized can be expressed by Formula (8) below. However, $\theta$ in the following Formula (8) is limited to a case where $\theta$ is greater than $\Delta\theta$.

$$r(\lambda) = \frac{I(\theta + \Delta\theta)}{I(\theta - \Delta\theta)} \approx \frac{I(\theta + 180\lambda\cos\phi)}{I(\theta - 180\lambda\cos\phi)} \qquad \cdots (8)$$

Finally, from above Formulas (7) and (8), Formula (9) below can be obtained by expressing the steepness $\lambda$ with the formula for the bright-dark change rate r.

$$\lambda = \frac{a\theta + b}{180a\cos\phi}\cdot\frac{r-1}{r+1} \qquad \cdots (9)$$

In above Formula (9), the light receiving angle $\theta$ and the angle $\phi$ with respect to the reference plane (plane $\alpha$) are values predetermined based on the installation position of the camera 2 with respect to the steel sheet S, and thus parameters a and b are determined from an angle dependence of the radiance. Therefore, the steepness $\lambda$ can be physically estimated by calculating luminance values of the bright portion and the dark portion by image processing and substituting the ratio into above Formula (9) as the bright-dark change rate r.

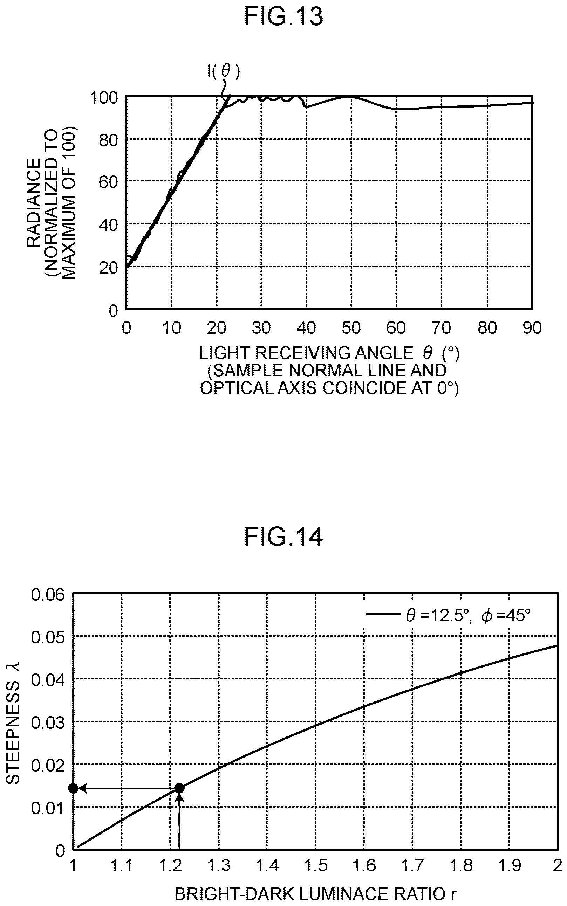

An example in which the steepness $\lambda$ is estimated based on the bright-dark pattern actually generated on the image of the steel sheet S will be described. The camera 2 was installed on the steel sheet S such that the light receiving angle $\theta$ becomes 12.5 degrees and the angle $\phi$ becomes 45 degrees with respect to the reference plane (plane $\alpha$). Then,

from the angular characteristic of the emissivity illustrated in FIG. 13, a = 3.5 and b = 20 were calculated by fitting above Formula (7). A straight line I (θ) in FIG. 13 is a straight line obtained as a result of fitting. FIG. 14 is a graph obtained by substituting the parameters a and b obtained into above Formula (9). By inputting the bright-dark change rate r (black dot on the right side of FIG. 14) based on this graph, the steepness λ (black dot on the left side of FIG. 14) can be calculated.

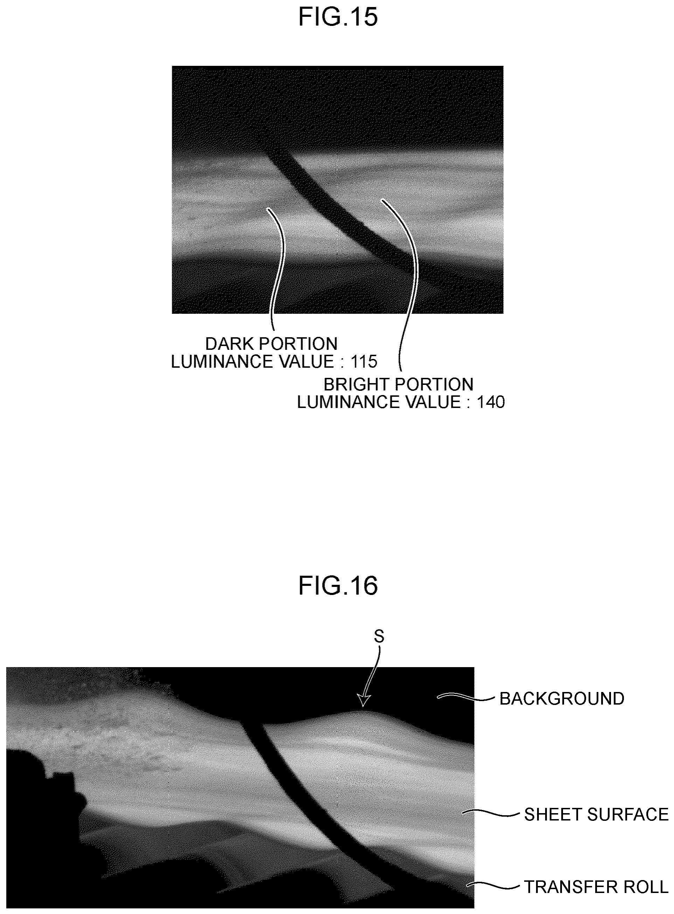

Next, an image obtained by the camera 2 is illustrated in FIG. 15. The bright-dark pattern is generated, and a bright portion luminance value was calculated as 140 and a dark portion luminance value was calculated as 115 by image processing. In addition, the bright-dark change rate r was calculated to be 1.22 by taking a ratio of these values. The steepness λ was successfully estimated to be 0.014 by substituting the calculated rate into above Formula (9). Also in the graph of FIG. 14, a point on the vertical axis (steepness λ) corresponding to the bright-dark change rate r of 1.22 is 0.014, and thus the steepness λ can also be calculated from the graph of FIG. 14.

Strictly speaking, since a distance from the camera 2 is greatly different between the upper edge portion and the lower edge portion, actual magnification and the conveying direction are different between the upper portion and the lower portion of the sheet region on the image. The difference becomes more conspicuous as positions of the steel sheet S to be measured and the camera 2 are closer. Therefore, more strictly, it is desirable to perform trapezoid correction on the image using linear transformation or the like from a positional relationship of camera parameters calculated in advance and the measurement target. In addition, by taking a sufficient distance between the steel sheet S to be measured and the camera 2, a difference in imaging conditions in the visual field can be reduced.

In Step S4 described above, the image is rotated so that the bright-dark pattern can be easily extracted, but the luminance profile may be extracted obliquely with respect to the conveying direction of the steel sheet S without rotation.

In the binarization in Step S1, a brightness of the thermal radiation light varies depending on a temperature of the measurement target. Therefore, when the binarization is performed with a fixed value, there is a problem that a part of the background is detected as the sheet region when the steel sheet S is bright, and conversely, the background cannot be detected when the steel sheet S is dark.

For the above problem, it is desirable to perform luminance correction. Examples of a method of luminance correction include a method for multiplying the luminance of the entire image by a fixed value such that a representative value such as a maximum value, an average value, a median value, or a percentile of the luminance of the entire image becomes a target value. In addition, dark current correction may be performed before multiplication.

In addition, for example, as illustrated in FIG. 16, it may be difficult to distinguish a structure from the sheet surface when a structure such as a transfer roll or a table is irradiated with thermal radiation light emitted from the steel sheet S, and the structure is brightly imaged in an image. In this case, in the image, the sheet surface is bright because the sheet surface directly receives the thermal radiation light, but the structure is often darker than the sheet surface because the structure receives reflection of the thermal radiation light emitted from the sheet surface.

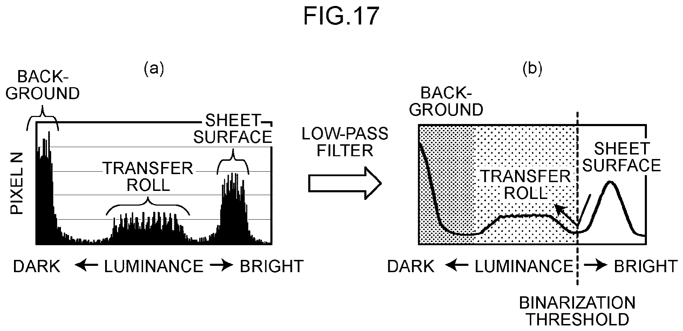

Therefore, a binarization threshold that can separate the structure and the sheet by performing the above-described luminance correction may be determined as a fixed value, but it is possible to more stably detect a valley portion by automatically detecting the valley portion from a shape of a histogram of the entire image. To detect the valley portion, for example, it is possible to stably calculate the minimum value by differential processing, search processing, or the like by applying a low-pass filter to a luminance histogram itself. An example of the luminance histogram is illustrated in (a) of FIG. 17, and (a) is a graph in which the luminance is plotted on the horizontal axis and the number of pixels N is plotted on the vertical axis. An example in which the low-pass filter is applied to a luminance direction of the luminance histogram is illustrated in (b) of FIG. 17. Note that, in the histogram, the valley portion includes two portions, which are a boundary between the sheet surface and the structure and a boundary between the structure and the background. Therefore, it is preferable to select the larger one of the two valley portions. A position separated by a dotted line in (b) of FIG. 17 corresponds to the binarization threshold.

Still more, in the present embodiment, an example of processing the image of the camera 2 by the image processing unit 3 to calculate the index of the shape of the steel sheet S has been described. However, a camera image may be simply presented to an operator as it is to perform feedback to the rolling control.

In addition, the index of the shape of the steel sheet S may be estimated from the image using a discriminator based on machine learning. Specifically, first, training data is created by associating the image of the steel sheet S obtained with the index of the shape measured visually or by some other methods as a correct answer. Then, using the training data created and the machine learning method, a discriminator that receives an image as an input to output a shape index is generated. Using this discriminator, the shape index of the steel sheet S to be measured is calculated. In addition to the image, input data for the machine learning and discriminator may be a feature amount calculated from the image. Still more, the machine learning method is not limited, and a convolutional neural network or the like may be used as long as real-time processing is not required.

(Example of application to shape acceptance determination)

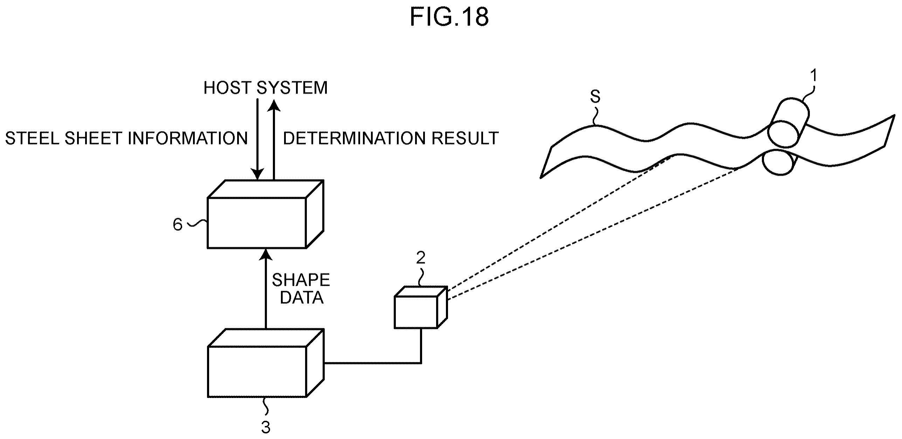

An example in which the band-like object shape measuring apparatus according to the embodiment is applied to shape acceptance determination will be described with reference to FIG. 18. The acceptance determination system in FIG. 18 includes the camera 2, the image processing unit 3, and an acceptance determination unit 6.

First, the image processing unit 3 calculates the shape index (shape data) of the steel sheet S from an image captured by the camera 2, and transmits the index to the acceptance determination unit 6. The acceptance determination unit 6 determines acceptance or rejection of the shape based on steel sheet information (e.g., sheet thickness, sheet width, steel type, and temperature) acquired from a host system and the shape index of the steel sheet S. An acceptance determination result is transmitted to the host system. Based on the acceptance determination result, the host system determines whether correction is needed, whether to cut defective shape portion, whether to perform rolling in the next process, and the like. As described above, by utilizing the shape index of the steel sheet S for an action in the next process, it is possible to suppress problems and contribute to improving product quality.

(Example of application to rolling feedback control)

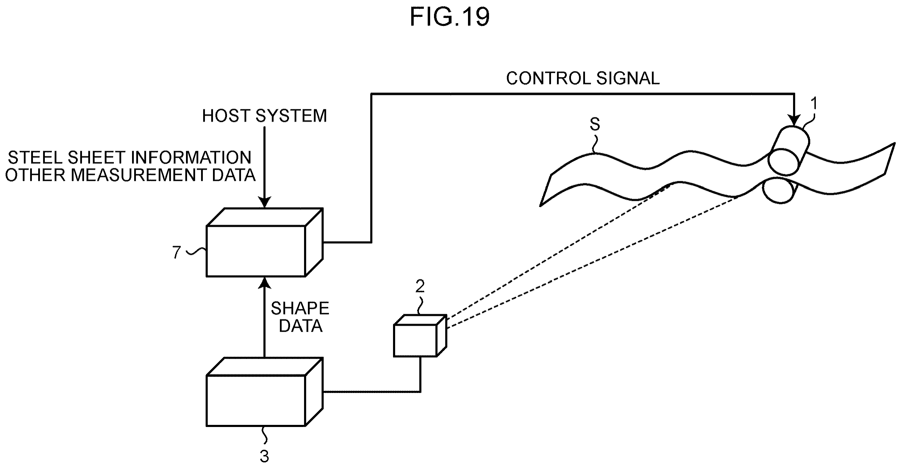

An example in which the band-like object shape measuring apparatus according to the embodiment is applied to rolling feedback control will be described with reference to FIG. 19. A rolling control system in FIG. 19 includes the camera 2, the image processing unit 3, and a rolling control unit 7.

First, the image processing unit 3 calculates the shape index of the steel sheet S from an image captured by the camera 2, and transmits the shape index to the rolling control unit 7. The rolling control unit 7 calculates a control parameter using the shape index based on the steel sheet information (e.g., sheet thickness, sheet width, steel type, and temperature) acquired from the host system, other measurement data such as a sheet passing position, and the shape index of the steel sheet S. The rolling control unit 7 transmits a control signal to the rolling roll 1 to perform the feedback control such as leveling. By performing the above feedback control, the shape of the product can be stabilized, and a shape defect itself can be reduced.

(Example of application to rolling control using machine learning)

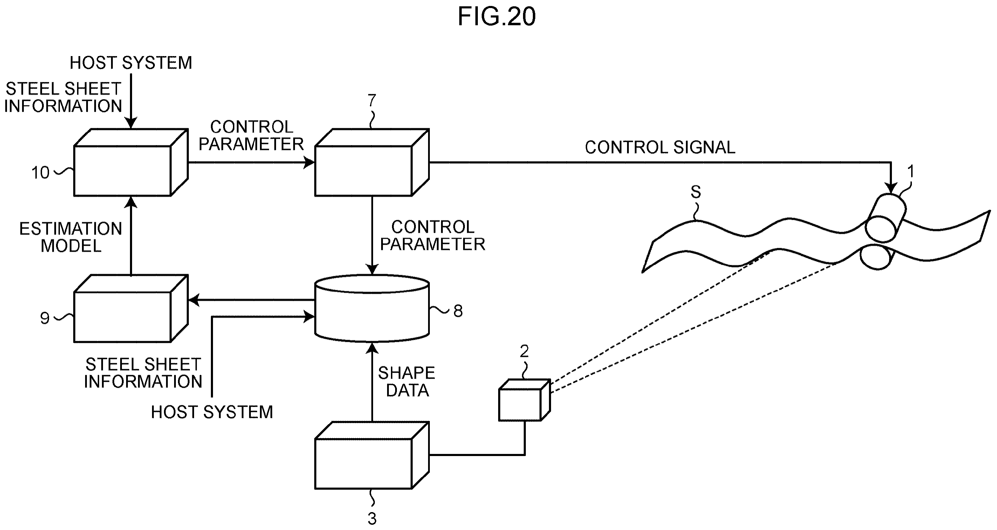

An example in which the band-like object shape measuring apparatus according to the embodiment is applied to the rolling control using machine learning will be described with reference to FIG. 20. A rolling control system in FIG. 20 includes the camera 2, the image processing unit 3, the rolling control unit 7, a data server 8, a machine learning unit 9, and a control parameter estimation unit 10.

First, the image processing unit 3 calculates the shape index of the steel sheet S from an image captured by the camera 2, and transmits the shape index to the data server 8. The data server 8 accumulates the shape index associated with steel sheet information (e.g., sheet thickness, sheet width, steel type, and temperature) acquired from the host system and a control parameter at the time of rolling.

Data accumulated is transmitted to the machine learning unit 9. In the machine learning unit 9, a model for estimating a control parameter for rolling while suppressing a shape defect is constructed by machine learning. An estimation model is transmitted to the control parameter estimation unit 10, and estimates the control parameter based on the steel sheet information acquired from the host system. The control parameter is transmitted to the rolling control unit 7. The rolling control unit 7 performs preset control such as leveling by transmitting a control signal to the rolling roll 1. By performing the above preset control, the shape of the product can be stabilized, and a shape defect itself can be reduced.

Note that, in the present application example, the control parameter in the preset control has been described. However, machine learning may also be similarly applied to calculation of a control parameter of the feedback control. Still more, by combining the preset control and the feedback control, the shape quality of the product can be further improved.

Still more, in addition to the above application examples, the band-like object shape measuring apparatus according to the embodiment can be provided as a part of band-like object manufacturing equipment.

Still more, the band-like object shape measuring method according to the embodiment is also applicable to a band-like object shape control method. In this case, the shape of the band-like object is measured by the above-described band-like object shape measuring method, and the shape of the band-like object is controlled to have a desired shape based on the measurement result.

Still more, the band-like object shape measuring method according to the embodiment is also applicable to a band-like object manufacturing method. In this case, the shape of the band-like object is measured by the above-described band-like object shape measuring method, and the band-like object is manufactured based on the measurement result.

Still more, the band-like object shape measuring method according to the embodiment is also be applicable to a band-like object quality management method. In this case, the shape of the band-like object is measured by the above-described band-like object shape measuring method, and a quality of the band-like object is managed based on the measurement result.

The band-like object shape measuring method, the band-like object shape control method, the band-like object manufacturing method, the band-like object quality management method, the band-like object shape measuring apparatus, and the band-like object manufacturing equipment according to the embodiment described above have the following effects.

First, by passively imaging the thermal radiation light of the steel sheet S to be measured, imaging can be performed from a distant good installation environment without installing a light source or a sensor around the steel sheet S passing through, and the shape of the steel sheet S can be clearly captured.

Furthermore, by selecting an imaging element suitable for the temperature of the target object as the imaging element of the camera 2, the thermal radiation light can be efficiently received. For example, for a measurement target at about 900°C, sensitivity can be increased by using the near-infrared component of the Si imaging element. Thus, even for the steel sheet S conveyed at a high speed, a clear image without blurring can be captured by shortening the exposure time.

Still more, by performing imaging such that the angle $\phi$ formed by the orthographic projection of the optical axis of the camera 2 onto the reference plane (plane $\alpha$) and the conveying direction p of the steel sheet S does not become 90 degrees, it is possible to clearly capture sheet elongation at each position in the width direction generated on the surface of the steel sheet S. Here, when the light receiving angle $\theta$ is 20 degrees or less with respect to the reference plane (plane $\alpha$) of the surface of the steel sheet S, a higher effect can be obtained.

In the present invention, the steel sheet S on the exit side of finish rolling in the hot rolling step has been described. However, it is obvious that the present invention is also applicable to other high temperature rectangle-like steel materials such as steel plates and slabs. Still more, it is obvious that the present invention is applicable not only to band-like objects in a steel process but also to various band-like objects of different materials as long as thermal radiation light of the measurement target can be obtained. Furthermore, the present invention is preferably applied to the shape measurement of elongation in a portion other than the edge portion of the band-like object, so as to gain a larger effect. In particular, the present invention is more preferably applied to the shape measurement of elongation of the central portion of the band-like object, so as to gain a further larger effect.

The band-like object shape measuring method, the band-like object shape control method, the band-like object manufacturing method, the band-like object quality management method, the band-like object shape measuring apparatus, and the band-like object manufacturing equipment according to the present invention have been specifically described above with reference to the embodiments and examples for carrying out the invention. However, the gist of the present invention is not limited to these descriptions, and is widely interpreted based on the description of the claims. It is obvious that various changes and modifications based on the descriptions are also included in the gist of the present invention.

Reference Signs List

| 1 | ROLLING ROLL |
| 2 | CAMERA |
| 3 | IMAGE PROCESSING UNIT |
| 4 | HEATER |
| 5 | TILT MECHANISM |
| 6 | ACCEPTANCE DETERMINATION UNIT |
| 7 | ROLLING CONTROL UNIT |
| 8 | DATA SERVER |
| 9 | MACHINE LEARNING UNIT |
| 10 | CONTROL PARAMETER ESTIMATION UNIT |
| S | STEEL SHEET |
| SA | STEEL SHEET SAMPLE |

**Claims**

1.　A band-like object shape measuring method for measuring a shape of a band-like object, the band-like object shape measuring method comprising:

a capturing step of capturing an image of thermal radiation light of the band-like object

such that an angle $\phi$ formed by orthographic projection of an optical axis of a camera onto a plane $\alpha$ and a conveying direction p of the band-like object does not become 90 degrees, the plane $\alpha$ being a reference plane of a surface of the band-like object; and

an image processing step of calculating an index of a surface shape of the band-like object based on radiance of the band-like object in the image obtained.

2. The band-like object shape measuring method according to claim 1, wherein the image processing step includes extracting a linear component from the radiance of the band-like object, the linear component being parallel to the conveying direction of the band-like object.

3. The band-like object shape measuring method according to claim 1 or 2, wherein in the capturing step, the plane $\alpha$ and the optical axis of the camera forms an angle $\theta$ that is less than or equal to 20 degrees.

4. The band-like object shape measuring method according to any one of claims 1 to 3, wherein the image processing step includes calculating, as the index, any one or more of a steepness, a wave height, a wave pitch, an elongation amount, and an elongation percentage at each position in a width direction on the surface of the band-like object from a bright-dark pattern of the band-like object obtained.

5. A method for controlling a shape of a band-like object, the method comprising:

   measuring the shape of the band-like object by the band-like object shape measuring method according to any one of claims 1 to 4; and
   controlling the shape of the band-like object, based on a result of the measuring, to have a desired shape.

6. A method for manufacturing a band-like object, the method comprising:

   measuring a shape of the band-like object by the band-like object shape measuring method according to any one of claims 1 to 4; and
   manufacturing the band-like object based on a result of the measuring.

7. A method for managing a quality of a band-like object, the method comprising:

   measuring a shape of the band-like object by the band-like object shape measuring method according to any one of claims 1 to 4; and
   managing the quality of the band-like object based on a result of the measuring.

8. A band-like object shape measuring apparatus that measures a shape of a band-like object, the band-like object shape measuring apparatus comprising:

   image capturing unit configured to capture an image of thermal radiation light of the band-like object

   such that an angle $\phi$ formed by orthographic projection of an optical axis of a camera onto a plane $\alpha$ and a conveying direction p of the band-like object does not become 90 degrees,
   the plane $\alpha$ being a reference plane of a surface of the band-like object; and

   image processing unit configured to calculate an index of a surface shape of the band-like object based on radiance of the band-like object in the image obtained.

9. Band-like object manufacturing equipment comprising the band-like object shape measuring apparatus according to claim 8.

FIG.1

# FIG.2

# FIG.3

# FIG.4

# FIG.5

(a)

(b)

# FIG.6

# FIG.7

(a)

(b)

# FIG.8

START

↓

EXTRACT SHEET REGION BY BINARIZATION — S1

↓

REMOVE CONNECTED/ISOLATED POINTS BY EXPANSION/CONTRACTION PROCESSING — S2

↓

EXTRACT SHEET REGION BLOB — S3

↓

CALCULATE CONVEYING DIRECTION AND ROTATE — S4

↓

EXTRACT UPPER AND LOWER EDGE PORTIONS — S5

↓

CALCULATE LUMINANCE PROFILE AT PREDETERMINED POSITION IN WIDTH DIRECTION — S6

↓

CALCULATE INDEX OF SHEET SHAPE — S7

↓

END

# FIG.9

(a)

(b)

BINARIZATION

S

S

# FIG.10

(a)

(b)

ROTATION

S

S

# FIG.11

(a)

S ) EXTRACTION
OF LUMINANCE
PROFILE AT
SHEET CENTER

A

(b)

LONGITUDINAL POSITION

# FIG.12

TANGENT OF
MAXIMUM INCLINATION $\omega_2$

TANGENT OF
MINIMUM INCLINATION $\omega_1$

OPTICAL
AXIS
DIRECTION

OPTICAL AXIS
DIRECTION

$S_2$

$S_1$

$\Delta\theta$

$\Delta\theta$

$\dfrac{L}{\cos\phi}$

# FIG.13

# FIG.14

## FIG.15

DARK PORTION
LUMINANCE VALUE : 115

BRIGHT PORTION
LUMINANCE VALUE : 140

## FIG.16

S

BACKGROUND

SHEET SURFACE

TRANSFER ROLL

# FIG.17

EP 4 664 063 A1

# FIG.18

HOST SYSTEM

STEEL SHEET INFORMATION    DETERMINATION RESULT

6

SHAPE DATA

3

2

S

1

# FIG.19

CONTROL SIGNAL

HOST SYSTEM

STEEL SHEET INFORMATION
OTHER MEASUREMENT DATA

7

SHAPE
DATA

3

2

S

1

EP 4 664 063 A1

# FIG.20

## INTERNATIONAL SEARCH REPORT

| International application No. |
|---|
| **PCT/JP2023/046150** |

### A. CLASSIFICATION OF SUBJECT MATTER

*G01B 11/24*(2006.01)i
FI: G01B11/24 K

According to International Patent Classification (IPC) or to both national classification and IPC

### B. FIELDS SEARCHED

Minimum documentation searched (classification system followed by classification symbols)

G01B11/00-11/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2018/168700 A1 (JFE STEEL CORPORATION) 20 September 2018 (2018-09-20) entire text, all drawings | 1-9 |
| A | JP 2019-181562 A (JFE STEEL CORPORATION) 24 October 2019 (2019-10-24) entire text, all drawings | 1-9 |
| A | JP 2000-357228 A (SUMITOMO METAL INDUSTRIES, LTD.) 26 December 2000 (2000-12-26) entire text, all drawings | 1-9 |
| A | JP 10-318719 A (MITSUBISHI HEAVY INDUSTRIES, LTD.) 04 December 1998 (1998-12-04) entire text, all drawings | 1-9 |

☐ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 March 2024** | **19 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2023/046150**

| Patent document cited in search report | Publication date (day/month/year) | Patent family member(s) | Publication date (day/month/year) |
|---|---|---|---|
| WO 2018/168700 A1 | 20 September 2018 | US 2020/0082550 A1 whole document<br>EP 3581880 A1<br>CN 110382999 A<br>KR 10-2019-0116403 A<br>TW 201837423 A | |
| JP 2019-181562 A | 24 October 2019 | (Family: none) | |
| JP 2000-357228 A | 26 December 2000 | (Family: none) | |
| JP 10-318719 A | 04 December 1998 | (Family: none) | |

Form PCT/ISA/210 (patent family annex) (July 2022)

## REFERENCES CITED IN THE DESCRIPTION

### Patent documents cited in the description

- JP S56124006 A
- JP S5540924 A
- JP 58011708 A
- JP 61040503 A
- JP 2008058036 A
- JP 2011099821 A
- JP 2016065863 A

### Non-patent literature cited in the description

- Development of shape meter employing LED dot pattern projection method for hot strip finishing mill. **ISEI**. iron and steel. The Iron and Steel Institute of Japan, 2019, vol. 105, 20-29
- Thermal measurement with radiation thermometer. **KANESHIGE**. molding. Japan Society of Polymer Processing, 2020, vol. 32, 121